# EUROPÄISCHE PATENTSCHRIFT

(11) **EP 3 406 869 B1**
(45) Veröffentlichungstag und Bekanntmachung des Hinweises auf die Patenterteilung: **27.11.2019**
(21) Anmeldenummer: 18158591.0
(22) Anmeldetag: 26.02.2018
(51) Int. Cl.: F01N 3/10, B60K 13/04, B60H 1/00, C09K 5/00, F01N 5/02, F01N 13/00, F01N 13/08, F01N 13/18, F28D 20/02, F16L 3/18

(54) **ABGASANLAGE FÜR EIN KRAFTFAHRZEUG SOWIE ENTSPRECHENDES KRAFTFAHRZEUG**
EXHAUST SYSTEM FOR A MOTOR VEHICLE AND CORRESPONDING MOTOR VEHICLE
INSTALLATION D'ÉCHAPPEMENT DE GAZ POUR UN VÉHICULE AUTOMOBILE AINSI QUE AUTOMOBILE CORRESPONDANT

(30) Priorität: 22.05.2017 DE 102017208637
(43) Veröffentlichungstag der Anmeldung: 28.11.2018
(73) Patentinhaber: AUDI AG, 85045 Ingolstadt (DE)
(72) Erfinder: Jägle, Karl, 85051 Ingolstadt (DE); Hoffmann, Thomas, 93339 Riedenburg (DE); Störmer, Markus, 92334 Berching (DE); Berringer, Alexander, 85092 Kösching (DE)

(56) Entgegenhaltungen:
- DE-A1-102005 004 674
- DE-A1-102012 107 908
- DE-A1-102013 215 507
- US-A1- 2013 199 751

## Beschreibung

Die Erfindung betrifft eine Abgasanlage für ein Kraftfahrzeug, mit einem Abgasrohr zum Abführen von Abgas einer abgaserzeugenden Einrichtung, wobei ein das Abgasrohr in Umfangsrichtung bezüglich einer Längsmittelachse des Abgasrohrs wenigstens bereichsweise umgebender Wärmespeicher vorliegt und in radialer Richtung zwischen dem Abgasrohr und dem Wärmespeicher über zumindest einen Teil der Längserstreckung des Wärmespeichers ein Querschnittsverstellelement zum Einstellen eines Durchtrittsquerschnitts zwischen dem Abgasrohr und dem Wärmespeicher angeordnet ist. Die Erfindung betrifft weiterhin ein Kraftfahrzeug.

Die Abgasanlage dient dem Abführen des Abgases wenigstens einer abgaserzeugenden Einrichtung, insbesondere eines abgaserzeugenden Antriebsaggregats des Kraftfahrzeugs, in Richtung einer Außenumgebung. Hierzu verfügt die Abgasanlage über das Abgasrohr, welches einerseits an das abgaserzeugende Antriebsaggregat angeschlossen ist und andererseits in eine Außenumgebung des Kraftfahrzeugs einmündet beziehungsweise an ein in die Außenumgebung einmündendes weiteres Abgasrohr angeschlossen ist. In dem mittels der Abgasanlage abgeführten Abgas ist Wärmeenergie enthalten, welche größtenteils oder sogar vollständig zusammen mit dem Abgas in die Außenumgebung abgegeben wird. Entsprechend geht die Wärmemenge für eine weitere Nutzung innerhalb des Kraftfahrzeugs verloren.

Aus der DE 10 2012 107908 A1 ist ein Wärmetauscher bekannt, welcher ein gelochtes Abgasrohr umgebendes Lochrohr ausweist und mittels diesem den Abgasdurchfluss und Wärmestrom zu einem radial äußeren Kühlmittelkanal steuert. Des Weiteren ist aus der Druckschrift US 2013/0199751 A1 ein Wärmespeicher für eine Abgasanlage eines Kraftfahrzeugs bekannt. Dieser kann Wärme aus dem Abgas rückgewinnen und für eine weitere Nutzung innerhalb des Kraftfahrzeugs bereitstellen.

Weiterhin ist aus der Druckschrift DE 10 2005 004 674 A1 eine Vorrichtung zur Schalldämpfung von pulsierenden Gasströmen, insbesondere in Ansaug- oder Abgasanlagen von Brennkraftmaschinen bei Kraftfahrzeugen bekannt. Die Vorrichtung weist ein von einem gasförmigen Medium durchströmbares Gehäuse auf, welches ein Gaseintritts- und ein Gasaustrittsrohr und eine Ventilanordnung mit einem federbelasteten, von der Gasströmung beaufschlagbaren, verschiebbaren Ventilkörper zur strömungsabhängigen Veränderung eines Durchtrittsquerschnitts für das einströmende Gas aufweist. Dabei wird vorgeschlagen, dass das Gaseintrittsrohr einen in das Gehäuse hineinragenden, perforierten Rohranschnitt aufweist, dass der Ventilkörper als Rohrkörper ausgebildet ist und mit dem Rohrabschnitt einen Durchtrittsspalt, insbesondere einen Ringspalt, bildet, und dass der Rohrkörper in dem Rohrabschnitt verschiebbar ist.

Aus dem Stand der Technik ist weiterhin die Druckschrift DE 10 2013 215 507 A1 bekannt. Diese betrifft ein Fahrzeug mit einem Hybridantrieb, dessen Traktionsbatterie fondseitig an der Unterseite eines Fahrzeugbodenblechs angeordnet ist, das einen nach unten offenen Mitteltunnel für eine Abgasanlage einer Brennkraftmaschine aufweist. Dabei ist im Batteriegehäuse der Traktionsbatterie eine nach unten offene Längsgasse ausgebildet, die den Mitteltunnel zur Fahrzeugheckseite verlängert und durch die sich die Abgasanlage im weiteren Verlauf nach hinten erstreckt.

Weiterhin ist aus dem Stand der Technik die Druckschrift DE 10 2013 215 507 A1 bekannt. Diese betrifft ein Fahrzeug mit einem Hybridantrieb, dessen Traktionsbatterie frontseitig an der Unterseite eines Fahrzeugbodenblechteils angeordnet ist, das einen nach unten offenen Mitteltunnel für eine Abgasanlage einer Brennkraftmaschine aufweist. Hierbei ist im Batteriegehäuse der Traktionsbatterie eine nach unten offene Längsachse ausgebildet, die den Mitteltunnel zur Fahrzeugheckseite verlängert und durch die sich die Abgasanlage im weiteren Verlauf nach hinten erstreckt.

Schließlich betrifft die Druckschrift DE 10 2014 2015 878 A1 eine Brennkraftmaschine mit wenigstens einem Abgasturbolader und einem Abgasnachbehandlungssystem, wobei zumindest ein Abgasnachbehandlungselement stromaufwärts einer Turbine des Abgasturboladers angeordnet ist. Dabei ist eine Leistungsbereitstellungseinrichtung vorgesehen, die eingerichtet ist zur Bereitstellung von zusätzlicher Leistung für den Abgasturbolader in wenigstens einem Betriebszustand der Brennkraftmaschine.

Es ist Aufgabe der Erfindung, eine Abgasanlage für ein Kraftfahrzeug vorzuschlagen, welche gegenüber bekannten Abgasanlagen Vorteile aufweist, insbesondere eine flexible Nutzung der in dem Abgas enthaltenen Wärme ermöglicht.

Dies wird erfindungsgemäß mit einer Abgasanlage für ein Kraftfahrzeug mit den Merkmalen des Anspruchs 1 erreicht. Dabei ist vorgesehen, dass das Querschnittsverstellelement ein das Abgasrohr umgreifendes erstes Lochrohr und ein das erste Lochrohr umgreifendes zweites Lochrohr aufweist, wobei das erste Lochrohr und das zweite Lochrohr zum Einstellen des Durchtrittsquerschnitts gegeneinander verlagerbar sind.

Die Abgasanlage verfügt über den Wärmespeicher, mittels welchem die in dem Abgas enthaltene Wärme zwischengespeichert werden kann und nachfolgend für unterschiedliche Verwendungszwecke zur Verfügung steht. Der Wärmespeicher umgreift das Abgasrohr in Umfangsrichtung bezüglich der Längsmittelachse des Abgasrohrs wenigstens teilweise, bevorzugt jedoch vollständig. Der Wärmespeicher erstreckt sich hierbei in axialer Richtung entlang des Abgasrohrs über wenigstens einen Teil der Längserstreckung des Abgasrohrs.

Mithilfe des Querschnittsverstellelement kann der Durchtrittsquerschnitt zwischen dem Abgasrohr und dem Wärmespeicher eingestellt werden und entsprechend auch die Wärmeübertragung von dem Abgasrohr auf den Wärmespeicher und/oder von dem Wärmespeicher auf das Abgasrohr. Vorzugsweise ist das Abgasrohr im Bereich des Wärmespeichers und/oder im Bereich des Querschnittsverstellelements, insbesondere jedoch durchgehend, fluiddicht ausgestaltet, sodass mithilfe des Querschnittsverstellelements der Durchtrittsquerschnitt zwischen dem ununterbrochenen Außenumfang des Abgasrohrs und einem Innenumfang des Wärmespeichers herstellbar ist, wobei bei freigegebenem Durchtrittsquerschnitt, also einem Durchtrittsquerschnitt von größer als null, zwischen dem Abgasrohr und dem Wärmespeicher Wärme hauptsächlich über Wärmestrahlung und/oder Konvektion ausgetauscht wird. Das Maß der Wärmestrahlung und/oder der Konvektion, also die Wärmeübertragung, ist mittels des Querschnittsverstellelements einstellbar. Bevorzugt wird die Wärme größtenteils, insbesondere ausschließlich oder zumindest nahezu ausschließlich, über Wärmestrahlung übertragen.

Alternativ kann es jedoch auch vorgesehen sein, dass das Abgasrohr im Bereich des Wärmespeichers und/oder des Querschnittsverstellelements wenigstens eine Abgasdurchtrittsöffnung aufweist, sodass Abgas bei entsprechender Einstellung des Querschnittsverstellelements, also bei einem Durchtrittsquerschnitt von größer als null, durch diese aus dem Abgasrohr austreten und in Richtung des Innenumfangs des Wärmespeichers beziehungsweise bis hin zu diesem strömen kann. Anschließend kann das Abgas durch die Abgasdurchtrittsöffnung oder eine weitere Abgasdurchtrittsöffnung zurück in das Abgasrohr gelangen. Mit einer derartigen Ausgestaltung kann die Wärmeübertragung zwischen dem Abgas und dem Wärmespeicher verbessert werden. Es sind jedoch zusätzliche Maßnahmen zu treffen, um einen Austritt von Abgas aus der Abgasanlage zu verhindern.

Das Querschnittsverstellelement verfügt über das erste Lochrohr und das zweite Lochrohr. Das erste Lochrohr umgreift das Abgasrohr in Umfangsrichtung vorzugsweise vollständig, wohingegen das zweite Lochrohr das erste Lochrohr in Umfangsrichtung umgreift, vorzugsweise vollständig. Unter einem Lochrohr ist ein Rohr zu verstehen, welches wenigstens eine Durchtrittsöffnung aufweist, also eine Öffnung, die eine Wandung des Lochrohrs in radialer Richtung vollständig durchgreift. Die Durchtrittsöffnung kann dabei eine beliebige Querschnittsform aufweisen. Unter einem Loch im Sinne des Lochrohrs ist insoweit eine Durchströmungsöffnung mit beliebiger Querschnittsform zu verstehen. Beispielsweise ist eine runde, ovale, rechteckige beziehungsweise schlitzartige oder langlochartige Querschnittsform vorgesehen.

Sowohl das erste Lochrohr als auch das zweite Lochrohr verfügen über wenigstens eine derartige Durchtrittsöffnung, bevorzugt jedoch über jeweils mehrere derartige Durchtrittsöffnungen. Dabei ist vorzugsweise jeweils einer Durchtrittsöffnung des ersten Lochrohrs eine Durchtrittsöffnung des zweiten Lochrohrs zugeordnet, sodass bei wenigstens einer Anordnung der beiden Lochrohre zueinander die beiden Durchtrittsöffnungen miteinander fluchten, sodass der Durchtrittsquerschnitt zumindest teilweise, insbesondere vollständig, freigegeben ist. Bei wenigstens einer anderen Stellung der beiden Lochrohre zueinander sind die beiden Durchströmungsöffnungen hingegen derart angeordnet, dass ein anderer Durchtrittsquerschnitt vorliegt, insbesondere ein Durchtrittsquerschnitt von null, sodass die Verbindung, insbesondere die optische Verbindung und/oder Strömungsverbindung, zwischen dem Abgasrohr und dem Wärmespeicher unterbrochen ist.

Die beiden Lochrohre, also das erste Lochrohr und das zweite Lochrohr, sind zum Einstellen des Durchtrittsquerschnitts gegeneinander verlagerbar. Das Verlagern kann grundsätzlich in beliebiger Art und Weise erfolgen, beispielsweise sind die beiden Lochrohre in axialer Richtung bezüglich der Längsmittelachse des Abgasrohrs beziehungsweise einer Längsmittelachse wenigstens eines der beiden Lochrohre gegeneinander verlagerbar. Alternativ oder zusätzlich kann auch ein Verlagern der beiden Lochrohre gegeneinander in Umfangsrichtung vorgesehen sein, also ein Verdrehen der beiden Lochrohre gegeneinander.

Besonders bevorzugt ist das erste Lochrohr ortsfest angeordnet, nämlich bezüglich des Abgasrohrs. Das zweite Lochrohr hingegen ist bezüglich des ersten Lochrohrs und mithin bezüglich des Abgasrohrs verlagerbar, um auf diese Art und Weise den Durchtrittsquerschnitt einzustellen. Das Querschnittsverstellelement, insbesondere das erste Lochrohr und/oder das zweite Lochrohr, weist beispielsweise ein Material mit geringer Wärmeleitfähigkeit auf, insbesondere ein Material, das eine geringere Wärmeleitfähigkeit besitzt als das Abgasrohr.

Eine derartige Ausgestaltung der Abgasanlage ist insbesondere vorteilhaft, falls stromabwärts des Wärmespeichers hinsichtlich einer Hauptströmungsrichtung des Abgases durch das Abgasrohr eine Abgasreinigungseinrichtung angeordnet ist. Die Abgasreinigungseinrichtung ist derart ausgestaltet, dass sie für einen ordnungsgemäßen Betrieb eine bestimmte Betriebstemperatur aufweisen muss, welche höher ist als eine übliche Umgebungstemperatur des Kraftfahrzeugs.

Zu Beginn des Betriebs des Kraftfahrzeugs beziehungsweise seines Antriebsaggregats ist die Temperatur der Abgasreinigungseinrichtung üblicherweise geringer als ihre Betriebstemperatur. Um einen raschen Betrieb der Abgasreinigungseinrichtung zu ermöglichen, ist es sinnvoll, ihr möglichst viel der im Abgas enthaltenen Wärme zuzuführen. Ist in dem Wärmespeicher keine Wärme oder zumindest eine zu geringe Wärmemenge zwischengespeichert, so wird der Durchtrittsquerschnitt mittels des Querschnittsverstellelements auf einen möglichst kleinen Wert eingestellt, insbesondere auf null, um die in dem Abgas enthaltene Wärme größtenteils der Abgasreinigungseinrichtung und nicht oder allenfalls zu einem kleinen Teil dem Wärmespeicher zuzuführen.

Ist hingegen in dem Wärmespeicher bereits eine ausreichende Wärmemenge zwischengespeichert, so kann diese genutzt werden, um das von dem Antriebsaggregat kommende Abgas weiter zu erwärmen. Hierzu wird das Querschnittsverstellelement zum Freigeben des Durchtrittsquerschnitts zwischen dem Abgasrohr und dem Wärmespeicher eingestellt. Hat die Abgasreinigungseinrichtung ihre Betriebstemperatur erreicht, so kann in jedem Fall zumindest ein Teil der in dem Abgas enthaltenen Wärme in dem Wärmespeicher zwischengespeichert werden. Hierzu wird das Querschnittsverstellelement zum zumindest teilweisen Freigeben des Durchtrittsquerschnitts eingestellt.

Eine Weiterbildung der Erfindung sieht vor, dass in dem Wärmespeicher wenigstens eine Wärmetauscherleitung angeordnet ist. Die Wärmetauscherleitung dient dem Beladen und/oder Entladen des Wärmespeichers mit Wärme. Bevorzugt ist es vorgesehen, den Wärmespeicher mit der in dem Abgas enthaltenen Wärme aufzuladen und diese Wärme nachfolgend mithilfe der Wärmetauscherleitung beziehungsweise einem in dieser befindlichen Fluid aus dem Wärmespeicher abzuführen.

Über die Wärmetauscherleitung wird die Wärme beispielsweise einem Wärmeverbraucher zugeführt, insbesondere einer Fahrgastraumheizung des Kraftfahrzeugs. Eine derartige Ausgestaltung ist insbesondere bei Plug-in-Hybrid-Kraftfahrzeugen vorgesehen, bei welchen die Fahrgastraumheizung häufig elektrisch betrieben wird. Dies verringert jedoch die Reichweite des Kraftfahrzeugs. Zur Reichweitenvergrößerung ist es insoweit sinnvoll, wenigstens einen Teil der von der Fahrgastraumheizung benötigten Wärme dem Wärmespeicher zu entnehmen.

Eine Weiterbildung der Erfindung sieht vor, dass in dem Wärmespeicher ein Wärmespeichermedium vorliegt. Das Wärmespeichermedium dient der Zwischenspeicherung von Wärme. Das Wärmespeichermedium ist beispielsweise ein in einem Gehäuse des Wärmespeichers vorliegendes Fluid, wobei dieses in einem beliebigen Aggregatzustand vorliegen kann.

Eine weitere bevorzugte Ausgestaltung der Erfindung sieht vor, dass das Wärmespeichermedium ein Latentwärmespeichermedium ist. Das Latentwärmespeichermedium liegt in Form eines sogenannten Phasenwechselmaterials vor. Zur Zwischenspeicherung der Wärme wird die Enthalpie der thermodynamischen Zustandsänderung des Latentwärmespeichermediums genutzt.

Eine weitere Ausgestaltung der Erfindung sieht vor, dass die Wärmetauscherleitung das Wärmespeichermedium durchgreift. Bevorzugt ist hierbei - zumindest im Querschnitt gesehen - die Wärmetauscherleitung von einer Wandung des Wärmespeichergehäuses beabstandet angeordnet, sodass die Wärmetauscherleitung - wiederum im Querschnitt gesehen - in Umfangsrichtung vollständig von dem Wärmespeichermedium umgriffen ist. Mit einer derartigen Anordnung der Wärmetauscherleitung wird ein besonders guter Wärmeübergang zwischen dem Wärmespeichermedium und der Wärmetauscherleitung beziehungsweise dem in der Wärmetauscherleitung vorliegenden Fluid realisiert.

Eine weitere bevorzugte Ausgestaltung der Erfindung sieht vor, dass der Wärmespeicher ein hohlkreiszylindrisches Wärmespeichergehäuse aufweist. Das bedeutet, dass der Wärmespeicher im Querschnitt gesehen ringförmig ist und entsprechend die Abgasleitung in Umfangsrichtung vollständig umgreift. Der Wärmespeicher wird im Querschnitt gesehen sowohl außenseitig als auch innenseitig jeweils von einer runden Wandung des Wärmespeichergehäuses begrenzt. Eine derartige Ausgestaltung ermöglicht eine besonders platzsparende Anordnung des Wärmespeichers.

Eine weitere Ausführungsform der Erfindung sieht vor, dass eine in radialer Richtung zwischen dem Abgasrohr und dem Wärmespeicher vorliegende Fluidkammer evakuierbar oder evakuiert ist. Die Fluidkammer kann in radialer Richtung gesehen zwischen dem Abgasrohr und dem ersten Lochrohr oder zwischen dem zweiten Lochrohr und dem Wärmespeicher vorliegen. Durch das Evakuieren der Fluidkammer kann der konvektive Wärmeübergang besonders weit abgesenkt werden, insbesondere weiter als durch ein Einstellen des Durchtrittsquerschnitts mittels des Querschnittsverstellelements auf null. Durch das Evakuieren der Fluidkammer wird insoweit der Wärmespeicher thermisch hinsichtlich konvektiver Wärmeübertragung von dem Abgasrohr zumindest weitgehend oder sogar vollständig entkoppelt. Zum Evakuieren der Fluidkammer ist an diese eine entsprechende Einrichtung angeschlossen, insbesondere eine Unterdruckerzeugungseinrichtung, mittels welcher das Evakuieren der Fluidkammer vorgenommen werden kann.

Es kann alternativ vorgesehen sein, dass die Fluidkammer permanent evakuiert ist. Bei einer derartigen Ausgestaltung erfolgt die Wärmeübertragung zu wesentlichen Teilen, nämlich vollständig oder zumindest nahezu vollständig, durch Wärmestrahlung, sofern der Durchtrittsquerschnitt zumindest teilweise freigeben und insoweit von null verschieden ist. Ist der Durchtrittsquerschnitt gleich null, die optische Verbindung zwischen dem Abgasrohr und dem Wärmespeicher also unterbrochen, so ist die Wärmeübertragung vollständig oder zumindest nahezu vollständig unterbrochen, weil die konvektive Wärmeübertragung von dem Abgasrohr hin zu dem Wärmespeicher weitgehend oder sogar vollständig unterbunden ist.

Die Ausgestaltung mit permanent evakuierter Fluidkammer ermöglich also eine besonders effektive thermische Isolierung von Abgasrohr und Wärmespeicher gegeneinander. Die Fluidkammer kann permanent fluiddicht sein. Beispielsweise wird sie hierbei einmalig evakuiert und nachfolgend fluiddicht verschlossen. Alternativ kann die Fluidkammer selbstredend an die Unterdruckerzeugungseinrichtung angeschlossen sein und von dieser permanent evakuiert werden.

Schließlich kann im Rahmen einer weiteren Ausgestaltung der Erfindung vorgesehen sein, dass die Fluidkammer strömungstechnisch über ein Stellventil an eine Unterdruckquelle angeschlossen ist. Auf eine derartige Ausgestaltung wurde bereits hingewiesen. Die Unterdruckquelle stellt insoweit die Einrichtung zum Evakuieren der Fluidkammer dar. Die Unterdruckquelle ist über das Stellventil an die Fluidkammer angeschlossen. In einer ersten Schaltstellung des Stellventils ist die Fluidkammer strömungstechnisch von der Unterdruckquelle separiert, wohingegen in einer zweiten Schaltstellung die Strömungsverbindung zwischen der Fluidkammer und der Unterdruckquelle hergestellt ist. In der zweiten Schaltstellung wird somit die Fluidkammer mit dem von der Unterdruckquelle bereitgestellten Unterdruck beaufschlagt.

Bevorzugt ist die Fluidkammer über ein weiteres Stellventil an die Außenumgebung der Abgasanlage oder eine Druckquelle angeschlossen. Bei einer ersten Schaltstellung des weiteren Stellventils ist die Fluidkammer von der Außenumgebung beziehungsweise der Druckquelle fluidtechnisch entkoppelt, wohingegen sie in einer zweiten Schaltstellung mit dieser in Strömungsverbindung steht. In der zweiten Schaltstellung kann insoweit Fluid aus der Außenumgebung beziehungsweise von der Druckquelle in die Fluidkammer einströmen, sodass sich in dieser zumindest näherungsweise der Umgebungsdruck beziehungsweise der von der Druckquelle bereitgestellte Druck einstellt.

Die Erfindung betrifft weiterhin ein Kraftfahrzeug mit einem Energiespeicher zur Zwischenspeicherung elektrischer Energie und mit einer Abgasanlage, insbesondere einer Abgasanlage gemäß den vorstehenden Ausführungen, wobei die Abgasanlage über ein Abgasrohr zum Abführen von Abgas einer abgaserzeugenden Einrichtung verfügt, wobei ein das Abgasrohr in Umfangsrichtung bezüglich einer Längsmittelachse des Abgasrohrs wenigstens bereichsweise umgebender Wärmespeicher vorliegt und in radialer Richtung zwischen dem Abgasrohr und dem Wärmespeicher über zumindest einen Teil der Längserstreckung des Wärmespeichers ein Querschnittsverstellelement zum Einstellen eines Durchtrittsquerschnitts zwischen dem Abgasrohr dem Wärmespeicher angeordnet ist. Dabei ist vorgesehen, dass das Querschnittsverstellelement ein das Abgasrohr umgreifendes erstes Lochrohr und ein das erste Lochrohr umgreifendes zweites Lochrohr aufweist, wobei das erste Lochrohr und das zweite Lochrohr zum Einstellen des Durchtrittsquerschnitts gegeneinander verlagerbar sind.

Auf die Vorteile einer derartigen Ausgestaltung des Kraftfahrzeugs beziehungsweise der Abgasanlage wurde bereits hingewiesen. Sowohl das Kraftfahrzeug als auch die Abgasanlage des Kraftfahrzeugs können gemäß den vorstehenden Ausführungen weitergebildet sein, sodass insoweit auf diese verwiesen wird.

Eine weitere Ausführungsform der Erfindung sieht vor, dass der Wärmespeicher einen Bereich des Abgasrohrs umgreift, der in Überdeckung mit dem Energiespeicher steht. Der Wärmespeicher dient insoweit zur Wärmeisolierung des Energiespeichers beziehungsweise zur thermischen Entkopplung des Energiespeichers von dem Abgasrohr. Auf diese Art und Weise kann der Energiespeicher in unmittelbarer Umgebung des Abgasrohrs angeordnet werden, ohne dass es zu einer unzulässigen thermischen Beauftragung des Energiespeichers mit der Wärme des das Abgasrohr durchströmenden Abgases kommt.

Beispielsweise steht das Abgasrohr in axialer Richtung gesehen in wenigstens einem Bereich in Überdeckung mit dem Energiespeicher. In diesem Bereich ist auch der Wärmespeicher angeordnet. Besonders bevorzugt erstreckt sich der Wärmespeicher in axialer Richtung bezüglich der Längsmittelachse des Abgasrohrs gesehen über diesen gesamten Bereichen hinweg, insbesondere steht er wenigstens einseitig, besonders bevorzugt beidseitig, über diesen Bereich über. Es kann beispielsweise vorgesehen sein, dass der Wärmespeicher außenseitig an dem Energiespeicher anliegt. In diesem Fall kann es vorgesehen sein, dass der Wärmespeicher an seinem Außenumfang eine Wärmeisolierung aufweist, zumindest in seinem an dem Energiespeicher anliegenden Bereich.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Kraftfahrzeugs mit einem Energiespeicher zur Zwischenspeicherung elektrischer Energie und mit einer Abgasanlage,
- Figur 2: eine schematische Längsschnittdarstellung durch einen Bereich der Abgasanlage, sowie
- Figur 3: eine schematische Querschnittdarstellung durch einen Bereich der Abgasanlage.

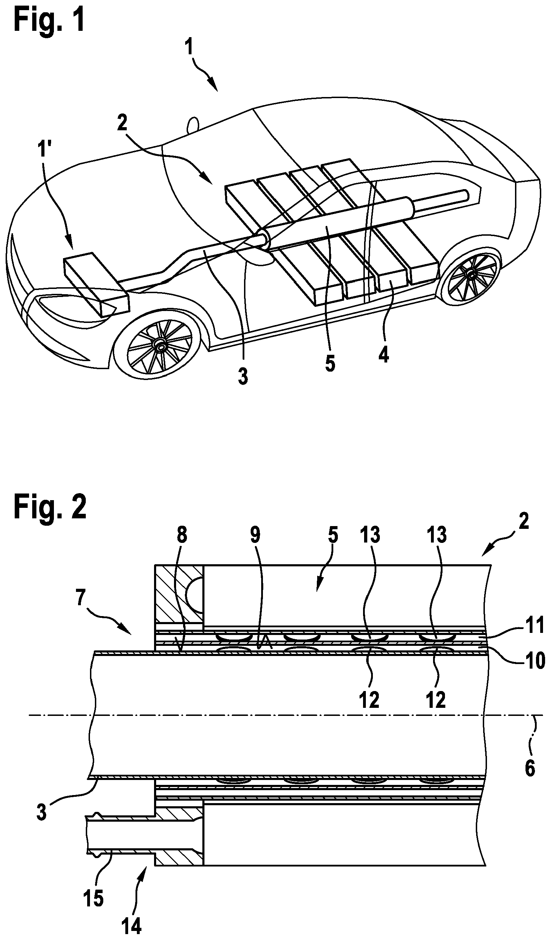

Die Figur 1 zeigt eine schematische Darstellung eines Kraftfahrzeugs 1, das eine abgaserzeugende Einrichtung 1', insbesondere ein hier nicht näher gezeigtes Antriebsaggregat, sowie eine Abgasanlage 2 aufweist. Die Abgasanlage 2 dient der Abführung von Abgasen, die während eines Betriebs der abgaserzeugenden Einrichtung 1' beziehungsweise des Antriebsaggregats anfallen. Die Abgasanlage 2 verfügt über ein Abgasrohr 3, das sich in Längsrichtung des Kraftfahrzeugs 1 wenigstens teilweise durch dieses hindurch erstreckt. Üblicherweise verläuft das Kraftfahrzeug 1 von dem in Hauptverrichtung des Kraftfahrzeugs 1 vorne angeordneten Antriebsaggregat bis hin zu einem in Hauptfahrrichtung hinten liegenden Heck des Kraftfahrzeugs 1. Am Heck des Kraftfahrzeugs 1 tritt das Abgas durch ein Endrohr aus der Abgasanlage 2 aus.

Weiterhin verfügt das Kraftfahrzeug 1 über einen Energiespeicher 4 zur Zwischenspeicherung elektrischer Energie. Die in dem Energiespeicher 4 zwischengespeicherte elektrische Energie dient beispielsweise dem Betrieb eines weiteren Antriebsaggregats, nämlich einer elektrischen Maschine. Bevorzugt ist eine das Antriebsaggregat und das weitere Antriebsaggregat aufweise Antriebseinrichtung des Kraftfahrzeugs 1 insoweit als Hybridantriebseinrichtung ausgebildet, welche sowohl das abgaserzeugende Antriebsaggregat als auch die elektrische Maschine aufweist.

Zur thermischen Isolierung von Abgasrohr 3 und Energiespeicher 4 voneinander ist in einem Bereich, in welchem das Abgasrohr 3 und der Energiespeicher 4 in axialer Richtung bezüglich einer Längsmittelachse des Abgasrohrs 3 in Überdeckung miteinander vorliegen ein Wärmespeicher 5 vorgesehen, welcher das Abgasrohr 3 in Umfangsrichtung bezüglich der Längsmittelachse des Abgasrohrs 3 zumindest teilweise, vorzugsweise vollständig umgibt. Bevorzugt ist das Abgasrohr 3 in dem von dem Wärmespeicher 5 umgebenden Bereiche vollständig gerade, weist also eine gerade Längsmittelachse auf.

Die Figur 2 zeigt eine schematische Schnittdarstellung durch einen Bereich der Abgasanlage 2, wobei das Abgasrohr 3 sowie der Wärmespeicher 5 zu erkennen sind. Weiterhin wird deutlich, dass in radialer Richtung bezüglich der Längsmittelachse 6 des Abgasrohrs 3 zwischen dem Abgasrohr 3 und dem Energiespeicher 4 ein Querschnittsverstellelement 7 angeordnet ist, welches dem Einstellen eines bestimmten Durchtrittsquerschnitts zwischen dem Abgasrohr 3 und dem Energiespeicher 4, insbesondere zwischen einem Außenumfang 8 des Abgasrohrs 3 und einem Innenumfang 9 des Energiespeichers 4, dient.

Das Querschnittsverstellelement 7 weist ein erstes Lochrohr 10 und ein zweites Lochrohr 11 auf. Jedes der Lochrohre 10 und 11 verfügt über mehrere Durchtrittsöffnungen 12 beziehungsweise 13, von welchen hier lediglich jeweils einige angedeutet sind. Die beiden Lochrohre 10 und 11 sind zum Einstellen des gewünschten Durchtrittsquerschnitts gegeneinander verlagerbar, insbesondere in axialer Richtung und/oder in Umfangsrichtung bezüglich der Längsmittelachse 6. Beispielsweise ist das erste Lochrohr 10 hierbei stationär bezüglich des Abgasrohrs 3 angeordnet, wohingegen das zweite Lochrohr 11 bezüglich des ersten Lochrohrs 10 und mithin auch bezüglich des Abgasrohrs 3 verlagerbar ist. Auch eine umgekehrte Ausführungsform kann selbstredend realisiert sein.

In dem Wärmespeicher 5 ist wenigstens eine Wärmetauscherleitung 14 angeordnet, von welcher ein Anschlussstutzen 15 dargestellt ist. Durch die Wärmetauscherleitung 14 kann ein Fluid geführt werden, um dem Wärmespeicher 15 Wärme zu entnehmen oder zuzuführen. An die Wärmetauscherleitung 14 ist beispielswiese strömungstechnisch eine hier nicht dargestellte Fluidfördereinrichtung angeschlossen, das zum Fördern des Fluids durch die Wärmetauscherleitung 14 dient.

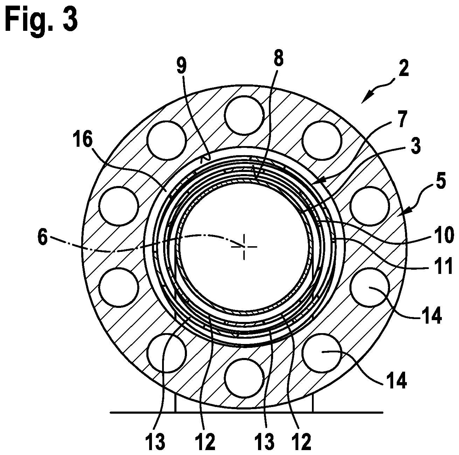

Die Figur 3 zeigt eine schematische Querschnittsdarstellung durch einen Bereich der Abgasanlage 2. Es wird deutlich, dass die Wärmetauscherleitung 14 den Wärmespeicher 5 mehrfach durchgreift beziehungsweise dass in dem Wärmespeicher 5 mehrere solcher Wärmetauscherleitungen 14 angeordnet sind. Zudem ist erkennbar, dass der Energiespeicher 4 im Querschnitt rund ist und insoweit das Abgasrohr 3 kreisringförmig umgibt.

Es kann vorgesehen sein, dass eine Fluidkammer 16, die in radialer Richtung zwischen dem Abgasrohr 3 und dem Wärmespeicher 5 vorliegt, evakuierbar oder permanent evakuiert ist. Zu diesem Zweck ist in ersterem Fall die Fluidkammer 16 bevorzugt an eine Unterdruckquelle angeschlossen, nämlich insbesondere über ein Stellventil. Durch das Evakuieren der Fluidkammer 16 wird der Wärmespeicher 5 von dem Abgasrohr 3 thermisch hinsichtlich per Konvektion übertragener Wärme weitgehend entkoppelt, sodass eine besonders gute Isolierung erzielt ist oder bei freigegebenem Durchtrittsquerschnitt die Wärmeübertragung weitestgehend oder ausschließlich durch Wärmestrahlung erfolgt. Als Unterdruckquelle dient beispielsweise das Antriebsaggregat, insbesondere das als Brennkraftmaschine ausgestaltete Antriebsaggregat. Alternativ kann als Unterdruckquelle eine Vakuumpumpe vorgesehen sein. Die Wärmetauscherleitung 14 dient beispielsweise dem Kühlen des Wärmespeichers 5 im Falle eines zu hohen Wärmeeintrags aus dem das Abgasrohr 3 durchströmenden Abgas in den Wärmespeicher 5.

## Patentansprüche

1. Abgasanlage (2) für ein Kraftfahrzeug (1), mit einem Abgasrohr (3) zum Abführen von Abgas einer abgaserzeugenden Einrichtung, wobei ein das Abgasrohr (3) in Umfangsrichtung bezüglich einer Längsmittelachse (6) des Abgasrohrs (3) wenigstens bereichsweise umgebender Wärmespeicher (5) vorliegt und in radialer Richtung zwischen dem Abgasrohr (3) und dem Wärmespeicher (5) über zumindest einen Teil der Längserstreckung des Wärmespeichers (5) ein Querschnittsverstellelement (7) zum Einstellen eines Durchtrittsquerschnitts zwischen dem Abgasrohr (3) und dem Wärmespeicher (5) angeordnet ist, **dadurch gekennzeichnet, dass** das Querschnittsverstellelement (7) ein das Abgasrohr (3) umgreifendes erstes Lochrohr (10) und ein das erste Lochrohr (10) umgreifendes zweites Lochrohr (11) aufweist, wobei das erste Lochrohr (10) und das zweite Lochrohr (11) zum Einstellen des Durchtrittsquerschnitts gegeneinander verlagerbar sind.

2. Abgasanlage nach Anspruch 1, **dadurch gekennzeichnet, dass** in dem Wärmespeicher (5) eine Wärmetauscherleitung (14) angeordnet ist.

3. Abgasanlage nach einem der vorhergehenden Ansprüche, **dadurch gekennzeichnet, dass** in dem Wärmespeicher (5) ein Wärmespeichermedium vorliegt.

4. Abgasanlage nach einem der vorhergehenden Ansprüche, **dadurch gekennzeichnet, dass** das Wärmespeichermedium ein Latentwärmespeichermedium ist.

5. Abgasanlage nach einem der vorhergehenden Ansprüche, **dadurch gekennzeichnet, dass** die Wärmetauscherleitung (14) das Wärmespeichermedium durchgreift.

6. Abgasanlage nach einem der vorhergehenden Ansprüche, **dadurch gekennzeichnet, dass** der Wärmespeicher (5) ein hohlkreiszylindrisches Wärmespeichergehäuse aufweist.

7. Abgasanlage nach einem der vorhergehenden Ansprüche, **dadurch gekennzeichnet, dass** eine in radialer Richtung zwischen dem Abgasrohr (3) und dem Wärmespeicher (5) vorliegende Fluidkammer (16) evakuierbar oder evakuiert ist.

8. Abgasanlage nach einem der vorhergehenden Ansprüche, **dadurch gekennzeichnet, dass** die Fluidkammer (16) strömungstechnisch über ein Stellventil an eine Unterdruckquelle angeschlossen ist.

9. Kraftfahrzeug (1) mit einem Energiespeicher (4) zur Zwischenspeicherung elektrischer Energie und mit einer Abgasanlage nach einem der vorhergehenden Ansprüche.

10. Kraftfahrzeug nach Anspruch 9, **dadurch gekennzeichnet, dass** der Wärmespeicher (5) einen Bereich des Abgasrohrs (3) umgreift, der in Überdeckung mit dem Energiespeicher (4) steht.

## Claims

1. Exhaust system (2) for a motor vehicle (1), with an exhaust pipe (3) for discharging exhaust of a device that produces an exhaust, wherein a heat accumulator (5), which surrounds the exhaust pipe (3) in the peripheral direction with respect to a longitudinal central axis (6) of the exhaust pipe (3), at least in regions thereof, is present, and, in the radial direction between the exhaust pipe (3) and the heat accumulator (5) over at least a portion of the longitudinal extension of the heat accumulator (5), a cross-section adjusting element (7) for adjusting a passage cross-section is arranged between the exhaust pipe (3) and the heat accumulator (5), **characterised in that** the cross-section adjusting element (7) has a first holed pipe (10), which surrounds the exhaust pipe (3), and a second holed pipe (11), which surrounds the first holed pipe (10), wherein the first holed pipe (10) and the second holed pipe (11) can be shifted in position relative to each other for adjusting the passage cross-section.

2. Exhaust system according to claim 1, **characterised in that** a heat exchanger line (14) is arranged in the heat accumulator (5).

3. Exhaust system according to any of the preceding claims, **characterised in that** a heat storage medium is present in the heat accumulator (5).

4. Exhaust system according to any of the preceding claims, **characterised in that** the heat storage medium is a latent heat storage medium.

5. Exhaust system according to any of the preceding claims, **characterised in that** the heat exchanger line (14) passes through the heat storage medium.

6. Exhaust system according to any of the preceding claims, **characterised in that** the heat accumulator (5) has a hollow circular-cylindrical heat accumulator housing.

7. Exhaust system according to any of the preceding claims, **characterised in that** a fluid chamber (16), which is present in the radial direction between the exhaust pipe (3) and the heat accumulator (5), can be evacuated or is evacuated.

8. Exhaust system according to any of the preceding claims, **characterised in that** the fluid chamber (16) is connected in terms of fluid mechanics by way of a control valve to a low-pressure source.

9. Motor vehicle (1) with an energy storage unit (4) for intermediate storage of electrical energy and with an exhaust system according to any of the preceding claims.

10. Motor vehicle according to claim 9, **characterised in that** the heat accumulator (5) surrounds a region of the exhaust pipe (3) that overlaps the energy storage unit (4).

## Revendications

1. Installation d'échappement de gaz (2) pour un véhicule automobile (1), avec un tuyau d'échappement (3) pour l'évacuation de gaz d'échappement d'un dispositif générant des gaz d'échappement, dans laquelle un accumulateur de chaleur (5) entourant au moins par zone le tuyau d'échappement (3) dans la direction circonférentielle par rapport à un axe médian longitudinal (6) du tuyau d'échappement (3) est présent et un élément de réglage de section transversale (7) pour le réglage d'une section transversale de passage entre le tuyau d'échappement (3) et l'accumulateur de chaleur (5) est agencé dans la direction radiale entre le tuyau d'échappement (3) et l'accumulateur de chaleur (5) sur au moins une partie de l'extension longitudinale de l'accumulateur de chaleur (5), **caractérisée en ce que** l'élément de réglage de section transversale (7) présente un premier tuyau perforé (10) entourant le tuyau d'échappement (3) et un deuxième tuyau perforé (11) entourant le premier tuyau perforé (10), dans laquelle le premier tuyau perforé (10) et le deuxième tuyau perforé (11) sont déplaçables l'un par rapport à l'autre pour le réglage de la section transversale de passage.

2. Installation d'échappement de gaz selon la revendication 1, **caractérisée en ce qu'**une conduite d'échangeur de chaleur (14) est agencée dans l'accumulateur de chaleur (5).

3. Installation d'échappement de gaz selon l'une quelconque des revendications précédentes, **caractérisée en ce qu'**un milieu d'accumulateur de chaleur est présent dans l'accumulateur de chaleur (5).

4. Installation d'échappement de gaz selon l'une quelconque des revendications précédentes, **caractérisée en ce que** le milieu d'accumulateur de chaleur est un milieu d'accumulateur de chaleur latente.

5. Installation d'échappement de gaz selon l'une quelconque des revendications précédentes, **caractérisée en ce que** la conduite d'échangeur de chaleur (14) traverse le milieu d'accumulateur de chaleur.

6. Installation d'échappement de gaz selon l'une quelconque des revendications précédentes, **caractérisée en ce que** l'accumulateur de chaleur (5) présente un boîtier d'accumulateur de chaleur cylindrique creux.

7. Installation d'échappement de gaz selon l'une quelconque des revendications précédentes, **caractérisée en ce qu'**une chambre de fluide (16) présente dans la direction radiale entre le tuyau d'échappement (3) et l'accumulateur de chaleur (5) peut être évacuée ou est évacuée.

8. Installation d'échappement de gaz selon l'une quelconque des revendications précédentes, **caractérisée en ce que** la chambre de fluide (16) est raccordée par écoulement par le biais d'une vanne de réglage à une source de dépression.

9. Véhicule automobile (1) avec un accumulateur d'énergie (4) pour le stockage intermédiaire d'énergie électrique et avec une installation d'échappement de gaz selon l'une quelconque des revendications précédentes.

10. Véhicule automobile selon la revendication 9, **caractérisé en ce que** l'accumulateur de chaleur (5) entoure une zone du tuyau d'échappement (3), qui est en recouvrement avec l'accumulateur d'énergie (4).
